(19) Europäisches Patentamt

European Patent Office

Office européen des brevets

(11) EP 1 622 286 B1

(12) **EUROPEAN PATENT SPECIFICATION**

(45) Date of publication and mention
of the grant of the patent:
**19.05.2010 Bulletin 2010/20**

(51) Int Cl.:
***H04W 52/36*** (2009.01)   *H04W 52/28* (2009.01)

(21) Application number: **04291967.0**

(22) Date of filing: **30.07.2004**

(54) **Wireless communication network, mobile station and method of operation therefor**

Drahtloses Kommunikationsnetzwerk, Mobilstation und Betriebsverfahren dafür

Réseau de communication sans fils, station mobile et procédé de fonctionnement associé

(84) Designated Contracting States:
**AT BE BG CH CY CZ DE DK EE ES FI FR GB GR HU IE IT LI LU MC NL PL PT RO SE SI SK TR**

(43) Date of publication of application:
**01.02.2006 Bulletin 2006/05**

(73) Proprietor: **MOTOROLA INC.**
**Schaumburg, IL 60196 (US)**

(72) Inventors:
• **Devautour, Bruno,**
**c/o Motorola Toulouse SAS**
**31047 Toulouse Cedex 1 (FR)**
• **Abdesselem, Ouelid,**
**c/o Motorola Toulouse SAS**
**31047 Toulouse Cedex 1 (FR)**

• **Pecen, Mark Edward,**
**c/o Motorola Inc.**
**Libertyville,**
**Illinois 60048 (US)**

(74) Representative: **Cross, Rupert Edward Blount et al**
**Boult Wade Tennant**
**Verulam Gardens**
**70 Gray's Inn Road**
**London WC1X 8BT (GB)**

(56) References cited:
**WO-A-00/01094      US-A1- 2004 085 940**
**US-B1- 6 748 245**

**Description**

**Field of the Invention**

The present invention relates to wireless communication, in general, and in particular, to a method of controlling communication in a wireless communication network and a communication unit for use therein.

**Background of the Invention**

In a cellular communication system (like for example the Global System for Mobile communication (GSM)), a geographical region is divided into a number of cells each of which is served by a base station. One base station, also termed as Base Transceiver Station (BTS) with a switching infrastructure is referred as a node of the network. The switching infrastructure supporting BTS may be shared with other BTSs. The network infrastructure is generally referred to as a switching and management infrastructure (SwMI), which substantially contains all of the communication elements apart from the MSs. This includes base transceiver stations (BTSs) connected to a conventional public-switched telephone network (PSTN) or internet through base station controllers (BSCs) and mobile switching centres (MSCs). In geographical terms reference to a node is a reference to an area served by one BTS, and in network terms reference to a node is a reference to one BTS and supporting it infrastructure. A remote unit referred also as subscriber or mobile station (MS) or communication unit is served via a radio communication link by the base station of the cell within which the remote unit is operating.

Communication from a mobile station to a base station is known as uplink, and communication from a base station to a mobile station is known as downlink.

The MS operating in a communication network has a limited output power and a limited number of transmit timeslots assigned. It means that the transmit power that more timeslots to be transmitted the less power can be devoted to one timeslot. This also means that higher data rate is achieved when more timeslots are available for the MS for use. In consequence at higher data rates the range of MS is shorter. To counteract this range reduction operation with the output power close to the limit improves the range of the MS. However, in many situations MS cannot transmit at the highest available data rate with the highest available output power level because of overheating of the transmitter section of the MS.

In order to limit the heat dissipation in the MS a power reduction schemes are implemented in MS operation control. In addition to overheating the transmitter section the power reduction schemes allows for reduction of interference to co-channel users whilst maintaining the quality of the radio link.

With increasing data rates and adding new functionalities to MS, like for example in case of DTM (Dual Transfer Mode) when both packet-switched (PS) and circuit-switched (CS) timeslots are assigned to the MS the transmitter overheating problem still exists but there are no known methods of RF power control.

US patent application no. 2004/0085940 describes a method for controlling communication via a radio link between a mobile station and a communication network based on a multi-slot based power class designation provided by the mobile station to the communication network. The designation may be associated with a power level of the mobile station and a number of slots corresponding to the power level Based on the multi-slot based power class designation, the communication network may assign radio resources to the mobile station to establish communication. During communication via the radio link, the mobile station may monitor an operating parameter, such as the temperature of a transmitting unit within the mobile station to determine whether the temperature exceeds a threshold. Upon detecting that the temperature exceeds the threshold, the mobile station may suspend communication with the communication network via the radio link to prevent overheating within the mobile station.

US patent no. 6,748,245 describes a method for managing power supply to a cellular radiotelephone station of which the transmission power is controlled by a network according to a power class indicated by the telephone. The method determines the charge level of the power supply of the radiotelephone station and according to the determined charge level, deduces the maximum transmission power able to be reached. The power class of the telephone is downgraded to a fictitious power class having a lower transmission power when the maximum transmission power able to be reached by the radiotelephone is less than the transmission power controlled by the network.

PCT patent application no. WO 00/01094 describes a method for controlling the operation of a transmitter of a mobile station transmitting data on more than one consecutive time slot in a TDMA system so as to prevent the power amplifier of the transmitter from overheating. The heat generated by the transmitter is monitored and if the power amplifier approaches or exceeds its upper rate operating value, the operation of the transmitter is regulated so as to prevent the power amplifier from damage.

## Summary of the Invention

There is a need for optimizing communication via a radio link between a mobile station and a network infrastructure in a wireless communication network by trading off between power level and data rate of the mobile station, which alleviate or overcome the disadvantages of the prior art.

According to a first aspect of the present invention there is provided a method of controlling communication between a mobile station and a network infrastructure of a wireless communication network as claimed in claim 1.

According to a second aspect of the present invention there is provided a wireless communication network as claimed in claim 12.

According to a third aspect of the present invention there is provided a mobile station for use in a wireless communication network as claimed in claim 21.

Further aspects of the present invention are as claimed in the dependent claims.

The present invention beneficially allows for optimization of power used by the mobile station for transmitting data to the network with maintaining data rate at a level that allows for highest possible data transfer that meet the power dissipation constraints. The present invention allows for "on the fly" change of the designated power class of the mobile station. Increasing MS's power class saves MS's battery life time, prevents overheating of the transmitter circuitry, reduces interference with other radio channels, increases data rate (in packet switched mode while maintaining voice communication on circuit switched mode) or maintains the connection by decreasing the designated power class when the distance between base station and MS increases.

## Brief description of the drawings

The present invention will be understood and appreciated more fully from the following detailed description taken in conjunction with the drawings in which:

FIG. 1 is a schematic illustration of the concept of dual transfer mode;
FIG. 2 is a flow chart illustrating a method for controlling communication in a wireless communication network in accordance with the present invention;
FIG. 3 is a block diagram illustrating a wireless communication system in one embodiment of the present invention;
FIG. 4 is a block diagram illustrating a mobile station in one embodiment of the present invention.

## Description of an embodiment of the invention

The following description focuses on an embodiment of the invention applicable to a GSM cellular communication system. However, it will be appreciated that the invention is not limited to this application but may be applied to many other communication systems. These systems include analog, digital or dual-mode communication system protocols such as, but not limited to, the Advanced Mobile Phone System (AMPS), the Narrowband Advanced Mobile Phone System (NAMPS), the Global System for Mobile Communications (GSM), the IS-55 Time Division Multiple Access (TDMA) digital cellular system, the IS-95 Code Division Multiple Access (CDMA) digital cellular system, the CDMA 2000 system, the Wideband CDMA (W-CDMA) system, the Personal Communications System (PCS), the Third Generation (3G) system, the Universal Mobile Telecommunications System (UMTS) and variations and evolutions of these protocols.

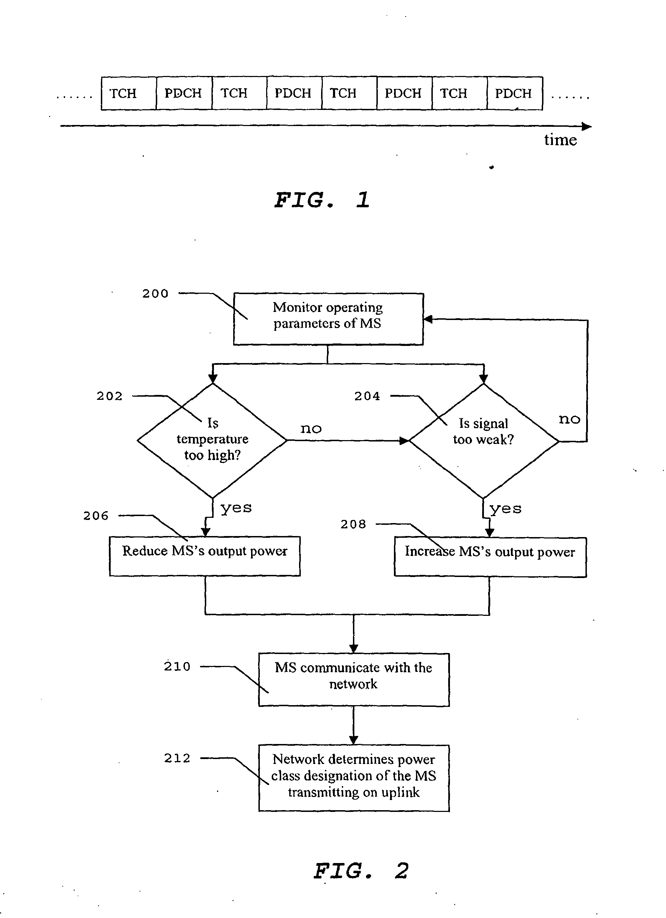

Efforts that are directed to further develop ETSI GPRS specifications to specify techniques that allow a mobile station, having a single receiver/transmitter, to handle a simultaneous GSM voice (circuit-switched (CS) operation) and packet session (packet-switched (PS) operation) have led to the creation of a dual transfer mode (DTM). In DTM both GSM voice and GPRS, or EDGE, data can be interchanged on the same radio frequency (RF). When the mobile station is operated in dual transfer mode, the operational context of the mobile station contains an active circuit-switched voice connection in dedicated mode, and an active packet-switched temporary block flow (TBF) in GPRS/EDGE packet transfer mode. In a Time Division Multiplex Access (TDMA) based communication system, for example GSM, the physical link is provided in form of a time slot. Assignment of CS and PS modes shown in one embodiment in Fig. 1 may be realized by giving the even numbered time slots to traffic channel TCH (i.e. circuit-switched voice) and the odd numbered time slots to packet data channel PDCH (i.e. packet switched). In result the traffic channel TCH is reduced to half-rate, in comparison to voice only GSM, (which will also be referred to as TCH/H), where the other half of the transmission rate is assigned to the PDCH. The situation on FIG. 1 in simplified form shows only transmission in one direction (uplink or downlink). However it is clear for the person skilled in the art that also other patterns of allocation of traffic and data channels in time slots are possible. For example, in one embodiment, in DTM mode, the MS and the network may be required to operate also in multi-slot configurations comprising of one traffic channel and one or more packet channels. In case of DTM multi-slot Classes 11, for instance, the MS may have to handle up to three uplink slots: one uplink slot for the CS connection and two uplink slots for the PS connection.

The term discontinuous transmission (DTX) herein below refers to speech transmissions in which the periods of speech inactivity can be used advantageously, e.g. to reduce the sending power of a mobile device, in order to save energy.

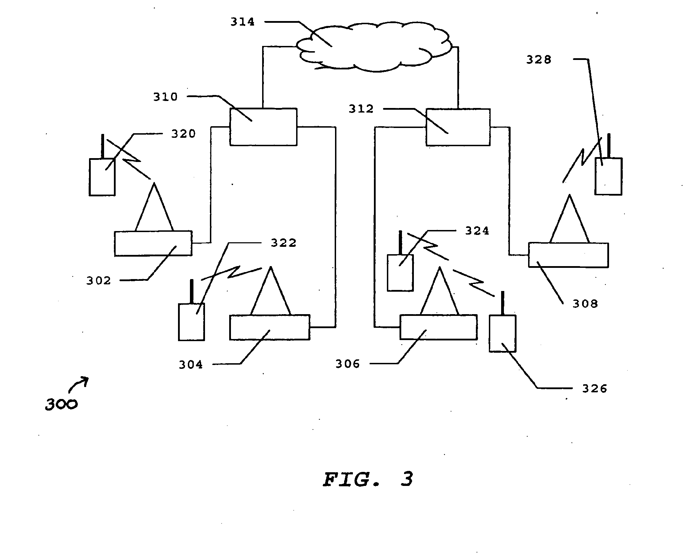

With reference to FIG. 2 and FIG. 3 a method of controlling communication between a mobile station (MS) 320 and a network infrastructure 302 of a wireless communication network 300 in one embodiment of the present invention is shown. The MS 320 operates in accordance with power class designation based on multiple uplink time slots assigned to the MS 320 and said communication is carried out using a dual transfer mode (DTM) or other multi-slot configuration. The network 300 comprises a network infrastructure, which includes base transceiver stations (BTSs) 302 - 308, which provide radio links to mobile stations 320 - 328 operating in respective geographical areas served by the BTSs 302 - 308.

For the sake of clarity embodiments described herein below refers to MS 320 and BTS 302. However it is clear for those skilled in the art that the same apply to other elements of the network 300.

The base transceiver stations are controlled by base stations controllers (BSCs) 310, 312 and all the network infrastructure's components are interconnected by means of a backbone network.

The method of controlling communication between MS 320 and network infrastructure, in this embodiment with BTS 320, comprises the following steps: changing 206, 208 by the MS 320 its maximum output power by changing its power class designation; and communicating 210 with the network infrastructure 302 using said changed maximum output power.

In operation, the MS's maximum output power is changed in response to monitored 200, 202, 204 operating parameters of said MS 320.

In one embodiment of the method according to the present invention a temperature of the transmitter circuitry 430 of the MS 320 is monitored 202. The method comprises the step of reduction 206 of the maximum output power of the MS 320 if said temperature of the transmitter circuitry 430 exceeds 202 a predefined temperature threshold.

In one example, in order to manage mobile station heat dissipation resulting from transmission on multiple uplink timeslots, the mobile station may reduce its maximum output power by up to the values provided in table 1.

Table 1

| Number of timeslots allocated in the uplink | Permissible nominal reduction of maximum output power, (dB) |
|---|---|
| 1 | 0 |
| 2 | 3,0 |
| 3 | 4,8 |
| 4 | 6,0 |
| 5. | 7,0 |
| 6 | 7,8 |
| 7 | 8,5 |
| 8 | 9,0 |

The actual supported maximum output power is in the range indicated by the parameters XXX_MULTISLOT_ POWER_PROFILE (as defined for example in table 10.5.1.7 of 3GPP TS 24.008 V5.12.0 (2004-06)) for n allocated uplink timeslots:

$$a \leq MS \ maximum \ output \ power \leq \min(MAX\_PWR, a + 2dB)$$

where:

$$a = \min(MAX\_PWR, MAX\_PWR + XXX\_MULTISLOT\_POWER\_PROFILE - 10\log(n))$$

*MAX_PWR* equals to the MS maximum output power according to the relevant power class;
*XXX_MULTISLOT_POWER_PROFILE* refers either to GMSK_MULTISLOT_POWER PROFILE or 8-PSK_MULTISLOT_POWER_PROFILE depending on the modulation type concerned, and
*XXX_MULTISLOT_POWER_PROFILE 0 = 0 dB*;

*XXX_MULTISLOT_POWER_PROFILE 1 = 2 dB*;
*XXX_MULTISLOT_POWER_PROFILE 2 = 4 dB*;
*XXX MULTISLOT POWER_PROFILE 3 = 6 dB*.

Where GMSK refers to Gaussian Minimum Shift Keying, a modulation technique used in GSM communication system and 8-PSK refers to phase shift keying, a method of digitally modulating a radio signal by shifting the phase of the transmitted carrier,

The supported maximum output power for each number of uplink timeslots forms a monotonic sequence. The maximum reduction of maximum output power from an allocation of n uplink timeslots to an allocation of n+1 uplink timeslots is equal to the difference of maximum permissible nominal reduction of maximum output power for the corresponding number of timeslots, as defined in table 1. As an exception, in case of a multislot uplink assignment, the first power control step down from the maximum output power is allowed to be in the range 0...2 dB.

Table 2 below presents the power classes and the number of slots available for a multi-slot based power class designation of a mobile station, which has a maximum power dissipation threshold of 15 W.

Table 2

| Power Class | Max Output Power (dBm) | Power Dissipation (W) versus Number of Timeslots | | | | | | | |
|---|---|---|---|---|---|---|---|---|---|
| | | 1 | 2 | 3 | 4 | 5 | 6 | 7 | 8 |
| 2 | 39 | 7.943 | 15.887 | 23.830 | 31.773 | 39.716 | 47.660 | 55.603 | 63.546 |
| 3 | 37 | 5.012 | 10.024 | 15.036 | 20.047 | 25.059 | 30.071 | 35.083 | 40.095 |
| 4 | 33 | 1.995 | 3.991 | 5.986 | 7.981 | 9.976 | 11.972 | 13.967 | 15.962 |
| 5 | 29 | 0.794 | 1.589 | 2.383 | 3.177 | 3.972 | 4.766 | 5.560 | 6.355 |

In the example illustrated in Table 2 as the power class increases, the output power of the mobile station 320 corresponding to the power class reduces but the number of slots corresponding to the power class increases. For example, a power class of 3 corresponding to a.maximum output power of 37 dBm (i.e., 5.012 W) may support two slots, and a power class of 5 corresponding to a maximum output power of 29 dBm (i.e., 0.79433 W) may support eight slots. The power class designation based on multiple uplink time slots may provide power classes corresponding to output powers lower than the maximum output power of the mobile station 320 (i.e., 39 dBm as shown Table 2) so that the number of slots available to the mobile station 320 may increase without exceeding a maximum power dissipation threshold (i.e., the non-shaded regions Table 2). It means that having assigned more time slots the MS 320 may transmit at a faster data rate without overheating the transmitting circuitry 430 within the mobile station 320 by operating at lower power levels.

The mobile station 320 may tradeoff between power and data rate because the maximum output power decreases as the number of slots available to the mobile station 320 for communication increases.

In a situation when MS 320 transmits to the network infrastructure in DTM the BTS 302 serving this MS 320 may have some issues to handle correctly Closed Loop Power Control mechanism on slow associated control channel (SACCH) if this has to be done on the CS channel in DTM mode and if said MS 320 has to reduce its output power. In that situation, BTS may not know accurately the MS output power reduction.

It has to be noted that in the PS domain, the BTS 302 is always able to determine in advance the precise number of slots the MS 320 is using for transmission since transmission may be triggered through the following mechanisms: uplink state flag (USF), polling, Exclusive Allocation (in case of DTM Single Slot or Extended DTM Multislot configurations).

In the CS domain, the BTS 302 is able to determine in advance whether the MS 320 has transmitted or not on the CS slot only on SID, SACCH frames when the MS 320 is using DTX uplink.

On the other frames, the MS 320 may have transmitted or not because of DTX uplink; that is why it is very important that the BTS 302 knows accurately the output power level that the MS 320 is going to use on each frame.

In DTM mode of operation, it is crucial that the BTS 302 knows the permissible nominal reduction of maximum output power, as defined in Table 1, for each number of timeslots in the uplink.

In one embodiment of the present invention the method comprises the step of estimating 212 by the network infrastructure the maximum output power of the MS 320 based on the number of time slots used for uplink by said MS 320.

In alternative embodiment the MS 320 provides to the network infrastructure 302 information on its current power class designation. In addition the MS 320 may also include information on an assigned power level and number of time-slots.

In case of DTM mode of operation, reported power control level corresponds to the power level that would have been used in the last burst of the previous SACCH period in case of a single-slot CS mode.

In one embodiment of the present invention the method further comprises the step of receiving by the MS 320 a command from the network infrastructure 302 to change the MS power class designation. The command includes an assigned power level and number of time-slots assigned to the MS 320.

In one example for non-DTM mode, upon receipt of a command from an SACCH to change its power level on the corresponding uplink channel, the MS changes to the new level at a rate of one nominal 2 dB power control step every 60 ms (13 TDMA frames), i.e. a range change of 15 steps should take about 900 ms. The change commences at the first TDMA frame belonging to the next reporting period. The MS 320 changes the power one nominal 2 dB step at a time, at a rate of one step every 60 ms following the initial change, irrespective of whether actual transmission takes place or not. However in case of DTM or other multi-slot configuration mode of operation, depending on the number of time-slots the MS 320 transmits on each frame, the MS 320 is required to reduce its actual output power on the CS channel as specified in 3GPP TS 05.05 section 4.1.1. The timing rule specified above does not apply to the actual output power. It applies to the power levels that would have been used in case of a single-slot CS mode.

In one embodiment said command comprises instruction to reduce 208 by the MS 320 its power class designation if strength of signal received by the network infrastructure from the MS 320 drops 204 below a predefined signal strength threshold. In consequence the MS 320 increases its output power and reduces number of time-slots used for uplink communication with the BTS 302. It also causes at the same time reduction of data rate of the transmission.

In yet another embodiment changing the power class designation of the MS may be accomplished by manual changing, by a user of the MS 320, to the user selectable power class designation based on number of uplink time slots.

In one embodiment of the present invention the maximum output power of the MS 320 is changed in accordance with a first algorithm for a circuit switched (CS) transmission and in accordance with a second algorithm for a packet switched (PS) transmission of said DTM.

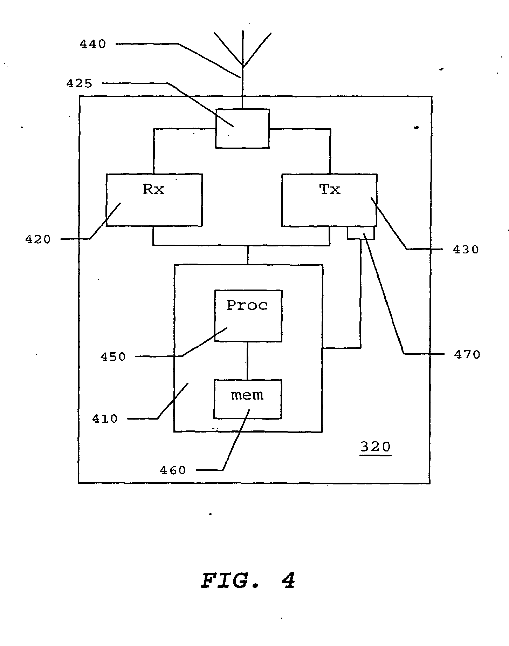

With reference to FIG. 4 a mobile station for use in a communication network in one embodiment of the present invention is shown. The mobile station 320 comprises a controller 410, a receiving circuitry 420, and a transmitting circuitry 430 connected via radio frequency (RF) switch 425 to an antenna 440. The controller 410 includes a processor 450 and a memory 460. The processor 450 is operatively coupled to the memory 460. In one example, said memory stores a program or a set of operating instructions for execution by the processor 450. The processor 450 executes the program or the set of operating instructions such that the mobile station 320 operates as described herein. The receiving circuitry 420 and the transmitting circuitry 430 are connected to the controller 410. A temperature sensor 470 is attached to the transmitting circuitry 430 and connected to the controller 410 such that the controller 410 reads temperature of the transmitting circuitry 430.

The mobile station (MS) 320 is adapted to operate in accordance with power class designation based on multiple uplink time-slots assigned to the MS 320 and to carry out said communication using a dual transfer mode (DTM) or other multi-slot configuration. The MS, 320 is further adapted to change its maximum output power by changing its power class designation and communicate with the network infrastructure 302 using said changed maximum output power.

The mobile station 320 is adapted to reduce its maximum output power if said temperature measured by the temperature sensor 470 on the transmitting circuitry 430 exceeds a predefined temperature threshold.

In one embodiment the mobile station 320 is adapted to provide to the network infrastructure 302 information on its current power class designation.

In yet another embodiment the mobile station 320 is further adapted to receive a command from the network infrastructure to change its power class designation. The received command includes an assigned power level and number of time-slots assigned to the MS. If strength of signal received by the network infrastructure from the MS 320 drops below a predefined signal strength threshold said command comprises instruction to reduce the MS power class designation.

In yet another embodiment the mobile station 320 is adapted to change its power class designation and said change is accomplished by manual changing, by a user of the MS 320, to user selectable power class designation based on number of uplink time slots.

With reference to FIG. 3 a wireless communication network 300 in one embodiment of the present invention is shown. The communication network 300 comprises a network infrastructure 302 - 314 and at least one mobile station (MS) 320. Said MS 320 is adapted to operate in accordance with power class designation based on multiple uplink time slots assigned to the MS 320 and to carry out communication with the network infrastructure 302 using a dual transfer mode DTM or other multi-slot configuration. The MS 320 is further adapted to change its maximum output power by changing its power class designation and communicate with the network infrastructure 302 using said changed maximum

EP 1 622 286 B1

output power.

In one embodiment the network infrastructure 302 314 of the communication network 300 is adapted to estimate the maximum output power of the MS 320 based on the number of time slots used for uplink by said MS 320.

In yet another embodiment the network infrastructure 302 of the communication network 300 is adapted to send a command to the MS 320 to change the MS's power class designation. The command includes an assigned power level and number of time-slots assigned to the MS 320. The wireless communication network infrastructure 302 sends said command comprising instruction to reduce the MS power class designation if strength of signal received by the network infrastructure from the MS 320 drops below a predefined signal strength threshold.

Another aspect of the present invention is a method for preventing overheating of a transmitting circuitry of a mobile station (MS) 320 for use in a wireless communication network 300. Said MS 320 operates in accordance with power class designation based on multiple uplink time slots assigned to the MS 320. Said communication is carried out using a dual transfer mode (DTM) or other multi-slot configuration. The method comprising the steps of changing 206 by the MS 320 its maximum output power by changing its power class designation and communicating 210 with the network infrastructure 302 using said changed maximum output power.

## Claims

1. A method of controlling communication between a mobile station /MS/ (320) and a network infrastructure (302) of a wireless communication network (300), wherein said MS (320) operates in accordance with power class designation based on multiple uplink time slots assigned to the MS (320) and said communication is carried out using a dual transfer mode /DTM/ where both packet-switched and circuit-switched timeslots are assigned to the mobile station, wherein a power class designation supports a maximum output power of the mobile station, the method **characterized by** the steps of:

   - changing (206, 208) by the MS (320) its maximum output power by changing its power class designation in accordance with a first algorithm for a circuit-switched transmission and in accordance with a second algorithm for a packet-switched transmission of said DTM; and
   - communicating (210) with the network infrastructure (302) using said changed maximum output power.

2. The method according to claim 1, wherein the MS maximum output power is changed in response to monitored (200, 202, 204) operating parameters of said MS (320).

3. The method according to claim 1 or 2 further comprising the step of estimating (212) by the network infrastructure the maximum output power of the MS (320) based on the number of time slots used for uplink by said MS (320).

4. The method according to claim 1 or 2 further comprising the step of providing by the MS (320) to the network infrastructure information on its current power class designation.

5. The method according to any one of preceding claims comprising the step of monitoring a temperature (202) of the transmitter circuitry (430) of the MS (320).

6. The method according to claim 5, comprising the step of reduction (206) of the maximum output power of the MS (320) if said temperature exceeds (202) a predefined temperature threshold.

7. The method according to claim 1, 5 or 6, wherein changing (206, 208) by the MS (320) its maximum output power and communicating (210) with the network infrastructure (302) using said changed maximum output power is arranged so as to prevent overheating of a transmitting circuitry (230) of the mobile station /MS/ (320).

8. The method according to any one of claims 1 - 5 comprising the step of receiving by the MS (320) a command from the network infrastructure to change the MS power class designation, the command includes an assigned power level and number of time-slots assigned to the MS (320).

9. The method according to claim 8, wherein said command comprises instruction to reduce (208) the MS (320) power class designation if strength of signal received by the network infrastructure from the MS (320) drops (204) below a predefined signal strength threshold.

10. The method according to any one of preceding claims, wherein said step of changing the power class designation of the MS comprises changing to user selectable power class designation based on number of uplink time slots.

11. The method according to any one of preceding claims, wherein said communication network (300) comprises a Time Division Multiplex Access based communication system.

12. A wireless communication network (300) comprising a network infrastructure (302 - 314) and at least one mobile station /MS/ (320), wherein said MS (320) is adapted to operate in accordance with power class designation based on multiple uplink time slots assigned to the MS (320) and to carry out communication with the network infrastructure (302) using a dual transfer mode /DTM/ where both packet-switched and circuit-switched timeslots are assigned to the mobile station, wherein a power class designation supports a maximum output power of the mobile station, the wireless communication network being **characterised in that** the MS (320) is further adapted to:

- change its maximum output power by changing its power class designation in accordance with a first algorithm for a circuit-switched transmission and in accordance with a second algorithm for a packet-switched transmission of said DTM; and
- communicate with the network infrastructure (302) using said changed maximum output power.

13. The wireless communication network (300) according to claim 12, wherein the MS (320) is adapted to change its maximum output power in response to monitored operating parameters of said MS (320).

14. The wireless communication network (300) according to claim 12 or 13, wherein the network infrastructure (302 - 314) is adapted to estimate the maximum output power of the MS based on the number of time slots used for uplink by said MS.

15. The wireless communication network (300) according to claim 12 or 13, wherein the MS (320) is adapted to provide to the network infrastructure (302) information on its current power class designation.

16. The wireless communication network (300) according to any one of claims 12 - 15, wherein the MS (320) is adapted to monitor a temperature of its transmitter circuitry (430).

17. The wireless communication network (300) according to claim 16, wherein the MS (320) is adapted to reduce its maximum output power if said temperature exceeds a predefined temperature threshold.

18. The wireless communication network (300) according to any one of claims 12 - 16 wherein the network infrastructure (302) is adapted to send a command to the MS (320) to change the MS's power class designation, the command includes an assigned power level and number of time-slots assigned to the MS (320).

19. The wireless communication network (300) according to claim 18, wherein the network infrastructure (302) is adapted to send said command comprising instruction to reduce the MS power class designation if strength of signal received by the network infrastructure from the MS drops below a predefined signal strength threshold.

20. The wireless communication network (300) according to any one of claims 12 - 19, wherein said communication network (300) comprises a Time Division Multiplex Access based communication system.

21. A mobile station /MS/ (320) for use in a wireless communication network (300), wherein said MS is adapted to operate in accordance with power class designation based on multiple uplink time slots assigned to the MS (320) and to carry out said communication using a dual transfer mode /DTM/ where both packet-switched and circuit-switched timeslots are assigned to the mobile station, wherein a power class designation supports a maximum output power of the mobile station, the MS (320) having a controller (410) and transmitting circuitry (230), the MS being **characterized in that** the MS (320) is adapted to:

- change its maximum output power by changing its power class designation in accordance with a first algorithm for a circuit-switched transmission and in accordance with a second algorithm for a packet-switched transmission of said DTM; and
- communicate with the network infrastructure using said changed maximum output power.

22. The mobile station (320) according to claim 21, wherein the MS (320) is adapted to change its maximum output power in response to monitored operating parameters of said MS (320).

23. The mobile station (320) according to claim 21 or 22 further adapted to provide to the network infrastructure information on its current power class designation.

24. The mobile station (320) according to any one of claims 21 - 23 having a temperature sensor (470), wherein the controller is further adapted to read a temperature of its transmitter circuitry (430).

25. The mobile station (320) according to claim 24, the mobile station is further adapted to reduce its maximum output power if said temperature exceeds a predefined temperature threshold.

26. The mobile station (320) according to any one of claims 21 - 24 having receiving circuitry (420), wherein the mobile station is further adapted to receive a command from the network infrastructure to change the MS power class designation, the command includes an assigned power level and number of time-slots assigned to the MS.

27. The mobile station (320) according to claim 26, wherein said command comprises instruction to reduce the MS power class designation if strength of signal received by the network infrastructure from the MS (320) drops below a predefined signal strength threshold.

28. The mobile station (320) according to any one of claims 21 - 27 adapted to change its power class designation, wherein said change comprises changing to user selectable power class designation based on number of uplink time slots.

29. The mobile station (320) according to any one of claims 21 - 28 adapted to operate in a Time Division Multiplex Access based communication system.

## Patentansprüche

1. Verfahren zur Steuerung einer Kommunikation zwischen einer Mobilstation /MS/ (320) und einer Netzinfrastruktur (302) eines drahtlosen Kommunikationsnetzwerks (300), wobei die MS (320) gemäß einer Leistungsklassenbestimmung basierend auf einer Vielzahl von Uplink-Zeitschlitzen, welche der MS (320) zugeteilt sind, arbeitet, und wobei die Kommunikation ausgeführt wird, indem ein dualer Transfermodus /DTM/ verwendet wird, bei dem sowohl die paketvermittelten Zeitschlitze als auch die leitungsvermittelten Zeitschlitze der Mobilstation zugeteilt sind, wobei eine Leistungsklassenbestimmung eine maximale Ausgangsleistung der Mobilstation unterstützt, wobei das Verfahren durch die folgenden Schritte **gekennzeichnet** ist:

    - Änderung (206, 208) durch die MS (320) ihrer maximalen Ausgangsleistung, indem sie ihre Leistungsklassenbestimmung gemäß einem ersten Algorithmus für eine leitungsvermittelte Übertragung und gemäß einem zweiten Algorithmus für eine paketvermittelte Übertragung des DTM ändert; und
    - Kommunikation (210) mit der Netzinfrastruktur (302) unter Verwendung der geänderten maximalen Ausgangsleistung.

2. Verfahren nach Anspruch 1, **dadurch gekennzeichnet, dass** die maximale Ausgangsleistung der MS ansprechend auf überwachte (200, 202, 204) Betriebsparameter der MS (320) verändert wird.

3. Verfahren nach Anspruch 1 oder 2, welches des Weiteren den Schritt der Beurteilung (212) der maximalen Ausgangsleistung der MS (320) durch die Netzinfrastruktur basierend auf der Anzahl von Zeitschlitzen, welche für die Uplink-Verbindung durch die MS (320) verwendet wird, aufweist.

4. Verfahren nach Anspruch 1 oder 2, welches des Weiteren den Schritt der Lieferung von Informationen an die Netzinfrastruktur durch die MS (320) über ihre augenblickliche Leistungsklassenbestimmung aufweist.

5. Verfahren nach einem der vorhergehenden Ansprüche, welches den Schritt der Überwachung einer Temperatur (202) der Sendeschaltkreisanordnung (430) der MS (320) aufweist.

6. Verfahren nach Anspruch 5, welches den Schritt der Reduzierung (206) der maximalen Ausgangsleistung der MS (320) aufweist, wenn die Temperatur einen vorher festgelegten Schwellenwert überschreitet (202).

7. Verfahren nach Anspruch 1, 5 oder 6, **dadurch gekennzeichnet, dass** die Änderung (206, 208) durch die MS (320) ihrer maximalen Ausgangsleistung und die Kommunikation (210) mit der Netzinfrastruktur (302) unter Verwendung der geänderten maximalen Ausgangsleistung derart ausgelegt ist, dass sie eine Überhitzung einer Sendeschaltkreisanordnung (230) der Mobilstation /MS/ (320) verhindert.

8.  Verfahren nach einem der Ansprüche 1 bis 5, welches den Schritt des Empfangs eines Befehls von der Netzinfrastruktur zur Änderung der Leistungsklassenbestimmung der MS durch die MS (320) aufweist, wobei der Befehl einen ihm zugeteilten Leistungspegel und eine Anzahl von der MS (320) zugeteilten Zeitschlitzen einschließt.

9.  Verfahren nach Anspruch 8, **dadurch gekennzeichnet, dass** der Befehl eine Anweisung zur Reduzierung (208) der Leistungsklassenbestimmung der MS (320) aufweist, wenn die von der Netzinfrastruktur von der MS (320) erhaltene Signalstärke unter einen vorher festgelegten Signalstärken-Schwellenwert fällt (204).

10. Verfahren nach einem der vorhergehenden Ansprüche, **dadurch gekennzeichnet, dass** der Schritt der Änderung der Leistungsklassenbestimmung der Mobilstation MS das Wechseln zu einer benutzerselektierbaren Leistungsklassenbestimmung basierend auf einer Anzahl von Uplink-Zeitschlitzen aufweist.

11. Verfahren nach einem der vorhergehenden Ansprüche, **dadurch gekennzeichnet, dass** das Kommunikationsnetzwerk (300) ein auf Time Division Multiplex Access oder Zeitvielfachzugriff basierendes Kommunikationssystem aufweist.

12. Drahtloses Kommunikationsnetzwerk (300), welches eine Netzinfrastruktur (302 - 314) und mindestens eine Mobilstation /MS/ (320) aufweist, wobei die MS (320) derart ausgelegt ist, dass sie gemäß einer Leistungsklassenbestimmung basierend auf einer der MS (320) zugeteilten Vielzahl von Uplink-Zeitschlitzen arbeitet, und dass sie eine Kommunikation mit der Netzinfrastruktur (302) unter Verwendung eines dualen Transfermodus /DTM/ ausführt, in welchem der Mobilstation sowohl paketvermittelte als auch leitungsvermittelte Zeitschlitze zugeteilt sind, wobei eine Leistungsklassenbestimmung eine maximale Ausgangsleistung der Mobilstation unterstützt, wobei das drahtlose Kommunikationsnetzwerk **dadurch gekennzeichnet ist, dass** die MS (320) des Weiteren derart ausgelegt ist, dass:

    - sie ihre maximale Ausgangsleistung ändert, indem sie ihre Leistungsklassenbestimmung gemäß einem ersten Algorithmus für eine leitungsvermittelte Übertragung und gemäß einem zweiten Algorithmus für eine paketvermittelte Übertragung des DTM ändert; und
    - sie mit der Netzinfrastruktur (302) unter Verwendung der geänderten maximalen Ausgangsleistung kommuniziert.

13. Drahtloses Kommunikationsnetzwerk (300) nach Anspruch 12, **dadurch gekennzeichnet, dass** die MS (320) derart ausgelegt ist, dass sie ihre maximale Ausgangsleistung ansprechend auf überwachte Betriebsparameter der MS (320) ändert.

14. Drahtloses Kommunikationsnetzwerk (300) nach Anspruch 12 oder 13, **dadurch gekennzeichnet, dass** die Netzinfrastruktur (302 - 314) derart ausgelegt ist, dass sie die maximale Ausgangsleistung der MS basierend auf der Anzahl von Zeitschlitzen, welche für eine Uplink-Verbindung von der MS verwendet werden, beurteilt.

15. Drahtloses Kommunikationsnetzwerk (300) nach Anspruch 12 oder 13, **dadurch gekennzeichnet, dass** die MS (320) derart ausgelegt ist, dass sie Informationen über ihre augenblickliche Leistungsklassenbestimmung an die Netzinfrastruktur (302) liefert.

16. Drahtloses Kommunikationsnetzwerk (300) nach einem der Ansprüche 12 bis 15, **dadurch gekennzeichnet, dass** die MS (320) zur Überwachung einer Temperatur ihrer Senderschaltkreisanordnung (430) ausgelegt ist.

17. Drahtloses Kommunikationsnetzwerk (300) nach Anspruch 16, **dadurch gekennzeichnet, dass** die MS (320) derart ausgelegt ist, dass sie ihre maximale Ausgangsleistung reduziert, wenn die Temperatur einen vorher festgelegten Temperatur-Schwellenwert überschreitet.

18. Drahtloses Kommunikationsnetzwerk (300) nach einem der Ansprüche 12 bis 16, **dadurch gekennzeichnet, dass** die Netzinfrastruktur (302) derart ausgelegt ist, dass sie einen Befehl an die MS (320) zur Änderung der Leistungsklassenbestimmung der MS sendet, wobei der Befehl einen ihm zugeteilten Leistungspegel und eine der MS (320) zugeteilte Anzahl von Zeitschlitzen einschließt.

**19.** Drahtloses Kommunikationsnetzwerk (300) nach Anspruch 18, **dadurch gekennzeichnet, dass** die Netzinfrastruktur (302) derart ausgelegt ist, dass sie den Befehl, welcher eine Anweisung zur Reduzierung der Leistungsklassenbestimmung der MS aufweist, sendet, wenn die die durch die Netzinfrastruktur von der MS empfangene Signalstärke unter einen vorher festgelegten Signalstärken-Schwellenwert fällt.

**20.** Drahtloses Kommunikationsnetzwerk (300) nach einem der Ansprüche 12 bis 19, **dadurch gekennzeichnet, dass** das Kommunikationsnetzwerk (300) ein auf Time Division Multiplex Access bzw. Zeitvielfachzugriff basierendes Kommunikationssystem aufweist.

**21.** Mobilstation /MS/ (320) zur Verwendung in einem drahtlosen Kommunikationsnetzwerk (300), **dadurch gekennzeichnet, dass** die MS zum Betrieb gemäß einer Leistungsklassenbestimmung basierend auf einer Vielzahl von Uplink-Zeitschlitzen, welche der MS (320) zugeteilt sind, und zur Ausführung der Kommunikation unter Verwendung eines dualen Transfermodus /DTM/, in welchem der Mobilstation sowohl paketvermittelte als auch leitungsvermittelte Zeitschlitze zugeteilt sind, ausgelegt ist, wobei eine Leistungsklassenbestimmung eine maximale Ausgangsleistung der Mobilstation unterstützt, wobei die MS (320) einen Controller bzw. Regler (410) und eine Sendeschaltkreisanordnung (230) aufweist, wobei die MS (320) **dadurch gekennzeichnet ist, dass** sie ausgelegt ist, um:

- ihre maximale Ausgangsleistung durch Änderung ihrer Leistungsklassenbestimmung gemäß einem ersten Algorithmus für eine leitungsvermittelte Übertragung und gemäß einem zweiten Algorithmus für eine paketvermittelte Übertragung des DTM zu ändern; und
- mit der Netzinfrastruktur unter Verwendung der geänderten maximalen Ausgangsleistung zu kommunizieren.

**22.** Mobilstation (320) nach Anspruch 21, **dadurch gekennzeichnet, dass** die MS (320) derart ausgelegt ist, dass sie ihre maximale Ausgangsleistung ansprechend auf überwachte Betriebsparameter der MS (320) ändert.

**23.** Mobilstation (320) nach Anspruch 21 oder 22, welche des Weiteren derart ausgelegt ist, dass sie Informationen über ihre augenblickliche Leistungsklassenbestimmung an die Netzinfrastruktur liefert.

**24.** Mobilstation (320) nach einem der Ansprüche 21 bis 23, welche einen Temperatursensor (470) aufweist, **dadurch gekennzeichnet, dass** der Controller bzw. Regler des Weiteren zur Ablesung einer Temperatur seiner Sendeschaltkreisanordnung (430) ausgelegt ist.

**25.** Mobilstation (320) nach Anspruch 24, **dadurch gekennzeichnet, dass** die Mobilstation des Weiteren zur Reduzierung ihrer maximalen Ausgangsleistung ausgelegt ist, wenn die Temperatur einen vorher festgelegten Temperatur-Schwellenwert überschreitet.

**26.** Mobilstation (320) nach einem der Ansprüche 21 bis 24, welche eine Empfangs-Schaltkreisanordnung (420) aufweist, **dadurch gekennzeichnet, dass** die Mobilstation des Weiteren derart ausgelegt ist, dass sie einen Befehl von der Netzinfrastruktur zur Änderung der Leistungsklassenbestimmung der MS empfängt, wobei der Befehl einen zugeteilten Leistungspegel und eine Anzahl von der MS zugeteilten Zeitschlitzen einschließt.

**27.** Mobilstation (320) nach Anspruch 26, **dadurch gekennzeichnet, dass** der Befehl eine Anweisung zur Reduzierung der Leistungsklassenbestimmung der MS aufweist, wenn die durch die Netzinfrastruktur von der MS (320) empfangene Signalstärke unter einen vorher festgelegten Signalstärken-Schwellenwert fällt.

**28.** Mobilstation /320/ nach einem der Ansprüche 21 bis 27, welche derart ausgelegt ist, dass sie ihre Leistungsklassenbestimmung ändert, **dadurch gekennzeichnet, dass** die Änderung das Wechseln zu einer benutzerselektierbaren Leistungsklassenbestimmung basierend auf einer Anzahl von Uplink-Zeitschlitzen aufweist.

**29.** Mobilstation (320) nach einem der Ansprüche 21 bis 28, **dadurch gekennzeichnet, dass** sie zum Betrieb in einem auf Time Division Multiplex Access bzw. Zeitvielfachzugriff basierenden Kommunikationssystem ausgelegt ist.

**Revendications**

**1.** Procédé pour commander une communication entre une station mobile /MS/ (320) et une infrastructure de réseau (302) d'un réseau de communication sans fil (300), dans lequel ladite station MS (320) opère selon une désignation de classe de puissance sur la base de multiples tranches de temps en liaison montante affectées à la station MS (320) et ladite communication est mise en oeuvre en faisant appel à un mode de transfert double /DTM/ où les tranches de temps à commutation de paquets et les tranches de temps à commutation de circuits sont affectées à la station mobile, dans lequel une désignation de classe de puissance prend en charge une puissance de sortie maximale de la station mobile, le procédé étant **caractérisé en ce qu'**il comporte les étapes ci-dessous consistant à:

- modifier (206, 208) par le biais de la station MS (320) sa puissance de sortie maximale en modifiant sa désignation de classe de puissance selon un premier algorithme pour une transmission à commutation de circuits et selon un second algorithme pour une transmission à commutation de paquets dudit mode DTM; et
- communiquer (210) avec l'infrastructure de réseau (302) en utilisant ladite puissance de sortie maximale modifiée.

2. Procédé selon la revendication 1, dans lequel la puissance de sortie maximale de station MS est modifiée en réponse à des paramètres d'exploitation contrôlés (200, 202, 204) de ladite station MS (320).

3. Procédé selon la revendication 1 ou 2 comportant en outre l'étape consistant à estimer (212), par le biais de l'infrastructure de réseau, la puissance de sortie maximale de la station MS (320) sur la base du nombre de tranches de temps utilisées pour la liaison montante par ladite station MS (320).

4. Procédé selon la revendication 1 ou 2 comportant en outre l'étape consistant à délivrer, par le biais de la station MS (320), à l'infrastructure de réseau, des informations sur sa désignation de classe de puissance en cours.

5. Procédé selon l'une quelconque des revendications précédentes comportant l'étape consistant à contrôler une température (202) du montage de circuits de transmission (430) de la station MS (320).

6. Procédé selon la revendication 5, comportant l'étape consistant à réduire (206) la puissance de sortie maximale de la station MS (320) lorsque ladite température dépasse (202) un seuil de température prédéfini.

7. Procédé selon la revendication 1, 5 ou 6, dans lequel les étapes consistant à modifier (206, 208), par le biais de la station MS (320), sa puissance de sortie maximale, et à communiquer (210) avec l'infrastructure de réseau (302) en utilisant ladite puissance de sortie maximale modifiée, sont agencées de manière à empêcher une surchauffe d'un montage de circuits de transmission (230) de la station mobile /MS/ (320).

8. Procédé selon l'une quelconque des revendications 1 à 5, comportant l'étape consistant à recevoir, par le biais de la station MS (320), une commande en provenance de l'infrastructure de réseau visant à modifier la désignation de classe de puissance de la station MS, la commande incluant un niveau de puissance affecté et un nombre de tranches de temps affectées à la station MS (320).

9. Procédé selon la revendication 8, dans lequel ladite commande comporte une instruction visant à réduire (208) la désignation de classe de puissance de station MS (320) lorsque la puissance de signal reçue par l'infrastructure de réseau à partir de la station MS (320) passe (204) sous un seuil de puissance de signal prédéfini.

10. Procédé selon l'une quelconque des revendications précédentes, dans lequel ladite étape de modification de la désignation de classe de puissance de la station MS comporte l'étape consistant à passer à une désignation de classe de puissance sélectionnable par l'utilisateur sur la base du nombre de tranches de temps en liaison montante.

11. Procédé selon l'une quelconque des revendications précédentes, dans lequel ledit réseau de communication (300) comporte un système de communication basé sur un accès multiple par répartition dans le temps.

12. Réseau de communication sans fil (300) comportant une infrastructure de réseau (302 - 314) et au moins une station mobile /MS/ (320), dans lequel ladite station MS (320) est apte à opérer selon une désignation de classe de puissance sur la base de multiples tranches de temps en liaison montante affectées à la station MS (320) et à mettre en oeuvre une communication avec l'infrastructure de réseau (302) en faisant appel à un mode de transfert double /DTM/ où des tranches de temps à commutation de paquets et des tranches de temps à commutation de circuits sont affectées à la station mobile, dans lequel une désignation de classe de puissance prend en charge une puissance de sortie maximale de la station mobile, le réseau de communication sans fil étant **caractérisé en ce que** la station MS (320) est en outre apte à:

- modifier sa puissance de sortie maximale en changeant sa désignation de classe de puissance selon un premier algorithme pour une transmission à commutation de circuits et selon un second algorithme pour une transmission à commutation de paquets dudit mode DTM; et
- communiquer avec l'infrastructure de réseau (302) en utilisant ladite puissance de sortie maximale modifiée.

13. Réseau de communication sans fil (300) selon la revendication 12, dans lequel la station MS (320) est apte à modifier sa puissance de sortie maximale en réponse à des paramètres d'exploitation contrôlés de ladite station MS (320).

14. Réseau de communication sans fil (300) selon la revendication 12 ou 13, dans lequel l'infrastructure de réseau (302-314) est apte à estimer la puissance de sortie maximale de la station MS sur la base du nombre de tranches de temps utilisées pour la liaison montante par ladite station MS.

15. Réseau de communication sans fil (300) selon la revendication 12 ou 13, dans lequel la station MS (320) est apte à délivrer à l'infrastructure de réseau (302) des informations sur sa désignation de classe de puissance en cours.

16. Réseau de communication sans fil (300) selon l'une quelconque des revendications 12 à 15, dans lequel la station MS (320) est apte à contrôler une température de son montage de circuits de transmission (430).

17. Réseau de communication sans fil (300) selon la revendication 16, dans lequel la station MS (320) est apte à réduire sa puissance de sortie maximale lorsque ladite température dépasse un seuil de température prédéfini.

18. Réseau de communication sans fil (300) selon l'une quelconque des revendications 12 à 16, dans lequel l'infrastructure de réseau (302) est apte à envoyer une commande à la station MS (320) visant à modifier la désignation de classe de puissance de la station MS, la commande inclut un niveau de puissance affecté et un nombre de tranches de temps affectées à la station MS (320).

19. Réseau de communication sans fil (300) selon la revendication 18, dans lequel l'infrastructure de réseau (302) est apte à transmettre ladite commande comportant une instruction visant à réduire la désignation de classe de puissance de la station MS lorsque la puissance de signal reçue par l'infrastructure de réseau à partir de la station MS passe sous un seuil de puissance de signal prédéfini.

20. Réseau de communication sans fil (300) selon l'une quelconque des revendications 12 à 19, dans lequel ledit réseau de communication (300) comporte un système de communication basé sur un accès multiple par répartition dans le temps.

21. Station mobile /MS/ (320) destinée à être utilisée dans un réseau de communication sans fil (300), dans lequel ladite station MS est apte à opérer selon une désignation de classe de puissance sur la base de multiples tranches de temps en liaison montante affectées à la station MS (320) et à mettre en oeuvre ladite communication en faisant appel à un mode de transfert double /DTM/ où des tranches de temps à commutation de paquets et des tranches de temps à commutation de circuits sont affectées à la station mobile, dans laquelle une désignation de classe de puissance prend en charge une puissance de sortie maximale de la station mobile, la station MS (320) présentant un contrôleur (410) et un montage de circuits de transmission (230), la station MS étant **caractérisée en ce que** la station MS (320) est apte à:

- modifier sa puissance de sortie maximale en modifiant sa désignation de classe de puissance selon un premier algorithme pour une transmission à commutation de circuits et selon un second algorithme pour une transmission à commutation de paquets dudit mode DTM; et
- communiquer avec l'infrastructure de réseau en faisant appel à ladite puissance de sortie maximale modifiée.

22. Station mobile (320) selon la revendication 21, dans lequel la station MS (320) est apte à modifier sa puissance de sortie maximale en réponse à des paramètres d'exploitation contrôlés de ladite station MS (320).

23. Station mobile (320) selon la revendication 21 ou 22, en outre apte à délivrer à l'infrastructure de réseau des informations sur sa désignation de classe de puissance en cours.

24. Station mobile (320) selon l'une quelconque des revendications 21 à 23, présentant une sonde thermique (470), dans lequel le contrôleur est en outre apte à lire une température de son montage de circuits de transmission (430).

25. Station mobile (320) selon la revendication 24, dans laquelle la station mobile est en outre apte à réduire sa puissance de sortie maximale lorsque ladite température dépasse un seuil de température prédéfini.

26. Station mobile (320) selon l'une quelconque des revendications 21 à 24, présentant un montage de circuits de réception (420), dans lequel la station mobile est en outre apte à recevoir une commande en provenance de l'infrastructure de réseau destinée à modifier la désignation de classe de puissance de la station MS, la commande incluant un niveau de puissance affecté et un nombre de tranches de temps affectées à la station MS.

27. Station mobile (320) selon la revendication 26, dans lequel ladite commande comporte un instruction visant à réduire la désignation de classe de puissance de la station MS lorsque la puissance de signal reçue par l'infrastructure de réseau à partir de la station MS (320) passe sous un seuil de puissance de signal prédéfini.

28. Station mobile (320) selon l'une quelconque des revendications 21 à 27, laquelle est apte à modifier sa désignation de classe de puissance, dans laquelle ladite modification comporte l'étape consistant à passer à une désignation de classe de puissance sélectionnable par l'utilisateur sur la base du nombre de tranches de temps en liaison montante.

29. Station mobile (320) selon l'une quelconque des revendications 21 à 28, laquelle est apte à opérer dans un système de communication basé sur un accès multiple par répartition dans le temps.

| TCH | PDCH | TCH | PDCH | TCH | PDCH | TCH | PDCH |

...... → time

## FIG. 1

200 — Monitor operating parameters of MS

202 — Is temperature too high?

204 — Is signal too weak?

no →

no

206 — yes → Reduce MS's output power

208 — yes → Increase MS's output power

210 — MS communicate with the network

212 — Network determines power class designation of the MS transmitting on uplink

## FIG. 2

FIG. 3

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040085940 A
- US 6748245 B
- WO 0001094 A